# EUROPÄISCHE PATENTSCHRIFT

(11) **EP 2 769 653 B1**
(45) Veröffentlichungstag und Bekanntmachung des Hinweises auf die Patenterteilung: **13.07.2016**
(21) Anmeldenummer: 14156562.2
(22) Anmeldetag: 25.02.2014
(51) Int. Cl.: A47J 17/02

(54) **Pellvorrichtung für gegartes Gemüse**
Peeling device for cooked vegetables
Dispositif d'épluchage pour légumes cuits

(30) Priorität: 26.02.2013 DE 102013101885
(43) Veröffentlichungstag der Anmeldung: 27.08.2014
(73) Patentinhaber: Kurz, Bernhard, 84494 Niedertaufkirchen (DE)
(72) Erfinder: Kurz, Bernhard, 84494 Niedertaufkirchen (DE)
(74) Vertreter: Rothkopf, Ferdinand

(56) Entgegenhaltungen:
- US-A- 2 781 760
- US-A- 5 659 962
- US-A1- 2009 038 159

## Beschreibung

### Hintergrund der Erfindung

Die Erfindung betrifft eine Pellvorrichtung für gegartes Gemüse, insbesondere für gekochte Kartoffeln, zum Abpellen der Schale des gegarten Gemüses.

Aus GB 547 882 A und GB 675 370 A sind klassische Pellvorrichtungen in Gestalt eines Messerschälers bekannt, die einen Griffabschnitt zum Halten mit der Hand des Benutzers und einen Schneidenabschnitt mit zumindest einer Schneide zum Abschälen der Schale von gegartem Gemüse aufweisen.

Aus DE 196 43 795 C2 ist ein Kartoffelschäler zum Abschälen der Schale einer mit ihrer Schale gekochten Kartoffel bekannt, mit einem ringförmigen Grundkörper und mit Federarmen, die jeweils vom Grundkörper radial nach innen gerichtet abstehen und radial nach außen elastisch aufbiegbar sind. Dabei sind die freien Enden der inneren Federarme im nicht-aufgebogenen Zustand aufeinander zu gerichtet. Die inneren Federarme sind auf ihrer Innenseite zumindest im Bereich der freien Enden mit spitzen Vorsprüngen versehen. Weitere Federarme sind vorgesehen, die jeweils vom Grundkörper radial nach innen gerichtet abstehen und radial nach außen elastisch aufbiegbar sind. Die freien Enden der äußeren Federarme sind im nicht-aufgebogenen Zustand axial weiter vom Grundkörper beabstandet und aufeinander zugerichtet, als die freien Enden der inneren Federarme.

Ferner sind die äußeren Federarme auf ihrer Innenseite zumindest im Bereich der freien Enden mit spitzen Vorsprüngen versehen.

Aus US 4 038 787 A ist ein abrasiver Handschuh bekannt, der eine flexible Hülle zum Überstülpen über die gesamte Hand des Benutzers sowie eine Vielzahl diskreter, abrasiver Einheiten bzw. Flächen an der Innenseite der flexiblen Hülle aufweist. Die abrasiven Flächen sind an der flexiblen Hülle mit einem wasserfesten Kleber befestigt.

Aus US 136 947 5 ist eine Pellvorrichtung mit einem rohrförmigen Halteabschnitt bekannt. Der zugehörige Pellabschnitt ist kuppenförmig gerundet gestaltet.

Aus US 2009/0038159 A1 ist eine Vorrichtung zum Erleichtern von Schneidvorgängen bekannt, die einen Halter für einen Daumen und ein Schneidbrett umfasst. In das Schneidbrett ist ein Schneidwerkzeug integriert, dessen Wirkseite dem Halter abgewandt ist und dessen Funktion gängigen Obst- und Gemüseschälern entspricht. Eine Schälwirkung wird beim seitlichen Bewegen eines sich im Halter befindenden Daumens und des damit bewegten Schneidwerkzeugs erzielt. Zudem ist am Halter eine kreisförmige Öffnung als Lüftung für den Daumen vorgesehen.

### Erfindungsgemäße Lösung

Gemäß der Erfindung ist eine Pellvorrichtung für gegartes Gemüse, insbesondere für gekochte Kartoffeln, zum Abpellen der Schale des gegarten Gemüses geschaffen, wobei ein Halteabschnitt bzw. Ansteckabschnitt zum Anstecken der Pellvorrichtung an einem bzw. auf einen Finger eines Benutzers, insbesondere auf die Fingerkuppe des Fingers, vorgesehen ist und ein mit dem Ansteckabschnitt verbundener Pellabschnitt bzw. Schababschnitt zum Abheben der Schale von dem Gemüse vorgesehen ist.

Der Halteabschnitt der Pellvorrichtung gemäß der Erfindung ist an seinem dem Pellabschnitt zugewandten Ende mit einem Bodenabschnitt stirnseitig geschlossen. Der derartige Bodenabschnitt bildet einen Endanschlag für einen die Pellvorrichtung abstützenden Finger und definiert damit insbesondere die richtige Anordnung und Lage der Pellvorrichtung am Finger. In dem Bodenabschnitt ist eine bogenförmige Aussparung zum Aufnehmen eines Fingernagels eines die Pellvorrichtung abstützenden Fingers ausgebildet. Die Aussparung schafft in Verbindung mit einem darin angeordneten Fingernagel eine zusätzliche Positionierung der Pellvorrichtung am Finger. Ferner führt die Aussparung dazu, dass die erfindungsgemäße Pellvorrichtung auch von Personen benutzt werden kann, die vergleichsweise lange Fingernägel tragen.

Die erfindungsgemäße Pellvorrichtung ist besonders einfach und funktional aufgebaut. Damit ergeben sich insbesondere bei der Handhabung erhebliche Vorteile, denn die Pellvorrichtung gemäß der Erfindung ist effizient und zugleich sehr intuitiv zu handhaben. Ferner kann die derart einfach aufgebaute Pellvorrichtung nach dem Schälen bzw. Abpellen sehr leicht gereinigt werden.

Der Halteabschnitt ist vorzugsweise zum Anstecken an nur einem einzelnen Finger des Benutzers gestaltet. Damit bleiben die anderen Finger der Hand des Benutzers zum Bewegen des zu schälenden Gemüses frei.

Der Halteabschnitt ist ferner bevorzugt ringförmig zum Aufstecken an den Finger des Benutzers gestaltet. Der derart aufgesteckte Halteabschnitt ist am Finger gut in axialer Richtung bzw. Längsrichtung des Fingers festgelegt und zugleich aufgrund der bestehenden Klemmwirkung gegen Verdrehen gesichert. Zugleich bleibt eine gewisse Restbeweglichkeit für den Finger, so dass die derartige Pellvorrichtung angenehm zu tragen ist.

Erfindungsgemäß ist der Halteabschnitt dabei rohrförmig gestaltet. Mit der Rohrform entsteht eine lange Kontaktfläche längs des Fingers, so dass die Pellvorrichtung beim Pellvorgang nicht am Finger wegschwenken oder wegklappen kann.

Der rohrförmige Halteabschnitt ist ferner erfindungsgemäß vorzugsweise konisch gestaltet. Die Konusform verbessert beim Einsetzen des Fingers des Benutzers in den Halteabschnitt den Reibschluss zwischen dem Halteabschnitt und dem Finger.

Der Pellabschnitt ist vorzugsweise von dem Finger des Benutzers weggerichtet an dem Halteabschnitt angebracht, und zwar besonders bevorzugt an der Spitze bzw. dem, bezogen auf den zugehörigen Finger, vorderen Bereich des Halteabschnitts. Der Pellabschnitt bildet dort eine Art Verlängerung des Fingernagels des Fingers, mit dem dann der Benutzer die Schale vom zu schälenden Gemüse abschieben kann. Der derartige Pellabschnitt steht also vom Halteabschnitt in axialer Richtung bzw. Längsrichtung des Fingers ab. Der freie, äußere bzw. nach außen gerichtete Rand des Pellabschnitts ist dabei vorzugsweise als ein Bogen gestaltet, der etwa halbrund oder halbelliptisch und damit dem Bogen eines Fingernagels nachempfunden ist.

Der Pellabschnitt ist erfindungsgemäß vorzugsweise schalenförmig gestaltet. Die Schalenform erhöht die Steifigkeit des Pellabschnitts und schafft darüber hinaus einen vorteilhaft gebogenen Randbereich am Pellabschnitt, mit dem die abzupellende Schale vorteilhaft abgeschoben werden kann.

Der schalenförmige Pellabschnitt ist erfindungsgemäß bevorzugt in Fortsetzung der Konusform des Halteabschnitts ebenfalls konisch gestaltet. Die Konusform trägt ebenfalls zur Versteifung bzw. Stabilisierung des Pellabschnitts bei, wobei die Stabilität des derart konischen Pellabschnitts zu dessen Spitze hin zunimmt. Alternativ ist der schalenförmige Pellabschnitt bevorzugt zylindrisch, insbesondere kreiszylindrisch, gestaltet. Die Zylinderform ist vorteilhaft für das Einführen und Ausführen eines Kerns einer zugehörigen Spritzgießform.

Der erfindungsgemäße Pellabschnitt ist ferner vorzugsweise mit einem kantigen Rand gestaltet. Der kantige Rand weist also keine Schneide auf, mit der die Schale des zu schälenden Gemüses von diesem herunter geschnitten wird, sondern der Rand ist als eine Schabkante gestaltet, mit der die Schale abgeschabt bzw. seitlich herunter geschoben werden kann. Das derartige Abschaben der Schale ist erheblich schneller zu bewerkstelligen, als ein gezieltes, schichtweises Herunterschneiden von Schale.

Besonders bevorzugt ist bei der erfindungsgemäßen Pellvorrichtung der Pellabschnitt einstückig mit dem Halteabschnitt gestaltet. Die derart aus nur einem Werkstück bzw. Bauteil hergestellte Pellvorrichtung ist besonders kostengünstig herstellbar, besonders leicht zu tragen und dabei zugleich mit einer sehr großen Stabilität ausgestaltbar.

Der Halteabschnitt der erfindungsgemäßen Pellvorrichtung ist vorzugsweise mit einer Blattfeder gestaltet, die als Federelement zum federnden Vorspannen gegen einen die Pellvorrichtung abstützenden Finger wirkt. Die Blattfeder spannt also den insbesondere ringförmigen bzw. rohrförmigen Halteabschnitt gegen den die Pellvorrichtung aufnehmenden Finger. Dabei erstreckt sich die Blattfeder vorzugsweise in Richtung der Längserstreckung des dabei rohrförmigen Halteabschnitts. Ferner ist die Blattfeder vorzugsweise an ihrem dem einzuschiebenden Finger zugewandten Endbereich mit einer Einführschräge versehen. Das derartige Federelement ist mittels Spritzgießen von Kunststoffmaterial kostengünstig herstellbar. Die erfindungsgemäße Pellvorrichtung ist für deren Benutzer damit angenehm zu tragen und zugleich angemessen fest an dessen Finger gehalten.

Die Blattfeder ist besonders bevorzugt an der dem Pellabschnitt diametral gegenüberliegenden Seite des Halteabschnitts angeordnet. Die derartige Blattfeder drängt den Halteabschnitt gerade in der unmittelbaren Nähe des Pellabschnitts gegen den Finger des Benutzers. Damit ist die erfindungsgemäße Pellvorrichtung besonders vorteilhaft und stabil an dem Finger angebracht.

Um die derartige Stützfunktion besonders wirkungsvoll zu gestalten, ragt die Blattfeder bei einer besonders bevorzugten Weiterbildung der erfindungsgemäßen Pellvorrichtung am Halteabschnitt nach radial innen.

### Kurzbeschreibung der Zeichnungen

Nachfolgend werden Ausführungsbeispiele der erfindungsgemäßen Lösung anhand der beigefügten schematischen Zeichnungen näher erläutert. Es zeigt:
Fig. 1 eine perspektivische Ansicht eines ersten Ausführungsbeispiels einer erfindungemäßen Pellvorrichtung,
Fig. 2 die Ansicht II gemäß Fig. 1,
Fig. 3 die Ansicht III gemäß Fig. 1,
Fig. 4 die Ansicht IV gemäß Fig. 1 und
Fig. 5 eine perspektivische Ansicht einer Kartoffel und einer Hand eines Benutzers mit dort anzuordnenden, zweiten Ausführungsbeispielen einer erfindungsgemäßen Pellvorrichtung beim Vorgang des Aufsteckens oder Abziehens der Pellvorrichtungen von einem oder mehreren der zugehörigen Finger.

### Detaillierte Beschreibung der Ausführungsbeispiele

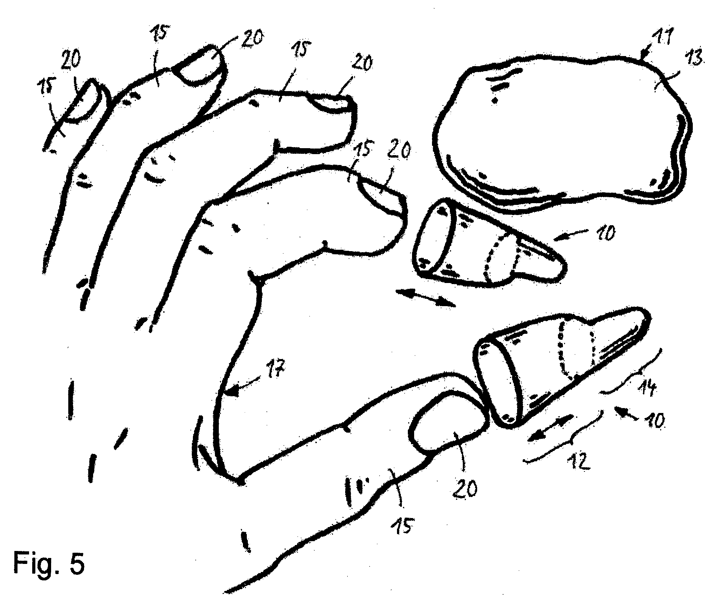

In Fig. 5 ist eine Pellvorrichtung 10 für gekochte Kartoffeln 11 als ein mögliches gegartes Gemüse dargestellt, mit der von der jeweiligen Kartoffel 11 deren Schale 13 abgepellt werden kann. Die Pellvorrichtung 10 weist einen Ansteckabschnitt bzw. Halteabschnitt 12 zum Anstecken der Pellvorrichtung 10 an einem Finger 15 einer Hand 17 eines Benutzers auf. An dem Halteabschnitt 12 ist ein Schababschnitt bzw. Pellabschnitt 14 zum Abheben der Schale von der jeweiligen Kartoffel 11 vorgesehen.

Der Halteabschnitt 12 ist zum Anstecken an nur einem einzelnen Finger 15 des Benutzers gestaltet, indem er als ein Rohrabschnitt ringförmig an dem Finger 15 des Benutzers aufsteckbar ist. Dabei ist der rohrförmige Halteabschnitt 12 zumindest leicht konisch gestaltet und kann entsprechend auf den Finger 15 aufgeschoben werden, bis er an bzw. auf diesem weitgehend ortsfest geklemmt ist. Der rohrförmige Halteabschnitt 12 kann dazu insbesondere an seiner Innenseite aus einem zumindest geringfügig elastischen Material gestaltet sein. Ferner kann der rohrförmige Halteabschnitt 12 vorteilhaft hinsichtlich seines Rohrumfangs verstellbar sein, so dass er wahlweise z.B. auf einem Daumen oder einem Zeigefinger der Hand eines Benutzers weitgehend ortsfest aufgesteckt werden kann. Ferner kann der rohrförmige Halteabschnitt 12 an seinem Ende vorteilhaft mittels eines Bodens bzw. Bodenabschnitts 19 zu einer Hutform bzw. einem Fingerhut verschlossen sein.

Der Pellabschnitt 14 ist von dem Finger 15 des Benutzers weggerichtet an dem Halteabschnitt 12 so angebracht, dass er bezogen auf den zugehörigen Finger 15 an den vorderen Bereich des Halteabschnitts 12 bzw. dessen Bodenabschnitt 19 anschließt und seine Spitze bzw. sein vorderster Abschnitt 16 von dem Finger 15 nach vorne hin wegzeigt. Der Pellabschnitt 14 bildet damit eine Art Verlängerung eines Fingernagels 20 des Fingers 15, mit dem dann der Benutzer die Schale 13 von der zu schälenden Kartoffel 11 abschieben kann.

Der Pellabschnitt 14 steht also vom Halteabschnitt 12 in axialer Richtung bzw. Längsrichtung des Fingers 15 ab. Ein nach außen gerichteter Rand 18 des Pellabschnitts 14 ist dabei als ein Bogen gestaltet, der etwa halbrund oder halbelliptisch und damit dem äußeren Bogen des Fingernagels 20 nachempfunden ist. Der Pellabschnitt 14 ist ferner schalenförmig, gekrümmt, durchgewölbt bzw. als Halbschale und zugleich leicht konisch in Richtung auf seine Spitze 16 zulaufend gestaltet.

Der Rand 18 des Pellabschnitts 14 ist kantig gestaltet, so dass er nicht als eine Schneide, sondern als ein Schabwerkzeug dient, mit dem die Schale 13 der zu schälenden Kartoffel 11 von dieser herunter geschabt bzw. geschoben werden kann.

Dabei ist der Pellabschnitt 14 mittels eines einzigen Spritzgussvorgangs aus Kunststoff, vorzugsweise PE (Polyethylen) oder PA (Polyamid), einstückig mit dem Halteabschnitt 12 ausgestaltet.

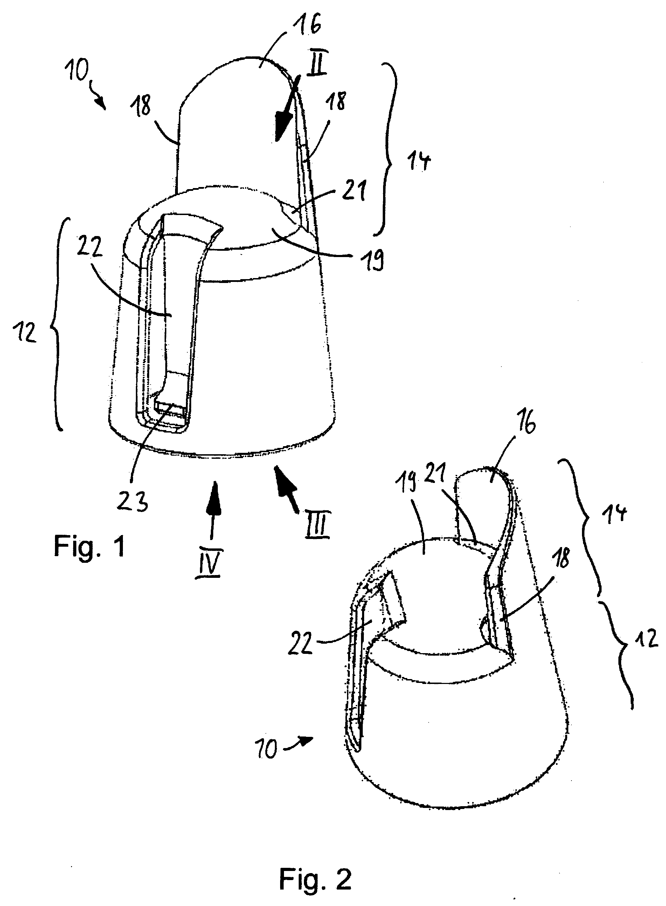

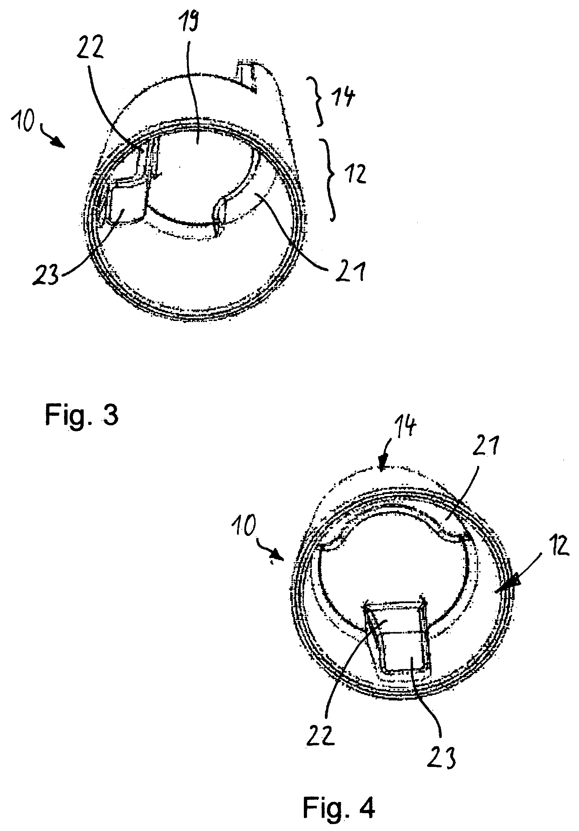

Die Fig. 1 bis 4 zeigen ein weiter ausentwickeltes Ausführungsbeispiel von Pellvorrichtungen 10. Diese weisen ebenfalls einen Halteabschnitt 12 mit einem einstückig daran ausgebildeten Pellabschnitt 14 sowie Bodenabschnitt 19 auf.

Der Halteabschnitt 12 ist ebenfalls rohrförmig und dabei leicht konisch gestaltet. Der Pellabschnitt 14 schließt übergangslos mit einer der Konusform des Halteabschnitts 12 angepassten konischen Form an den Halteabschnitt 12 an. Der Pellabschnitt 14 weist ebenfalls einen kantigen Rand 18 sowie einen vorderen, spitzen Abschnitt bzw. eine leicht abgerundete Spitze 16 auf.

In dem leicht gewölbten bzw. kappenförmigen Bodenabschnitt 19 befindet sich in dem zum Pellabschnitt 14 gewandten Randbereich eine bogenförmige Aussparung 21. In diese Aussparung 21 kann eine Person, die die Pellvorrichtung 10 verwendet, beim Aufschieben auf einen Finger 15 dessen Fingernagel 20 hineinschieben. Die Pellvorrichtung 10 ist damit dann zusätzlich an dem Finger 15 fixiert.

Zum Fixieren der Pellvorrichtung 10 an einem Finger 15 ist ferner an dem Halteabschnitt 12 an der dem Pellabschnitt 14 diametral gegenüberliegenden Seite eine Blattfeder 22 ausgebildet. Die Blattfeder 22 wirkt als ein Federelement zum federnden Vorspannen des zugehörigen Fingers 15 gegen die diametral gegenüberliegende Innenseite des ringförmigen bzw. rohrförmigen Halteabschnitts 12. Die Blattfeder 22 erstreckt sich in Richtung der Längserstreckung des rohrförmigen Halteabschnitts 12, ragt nach radial innen in das Innere des Halteabschnitts 12 und ist an ihrem dem einzuschiebenden Finger 15 zugewandten Endbereich 23 mit einer Einführschräge versehen.

Abschließend sei angemerkt, dass sämtlichen Merkmalen, die in den Anmeldungsunterlagen und insbesondere in den abhängigen Ansprüchen genannt sind, trotz dem vorgenommenen formalen Rückbezug auf einen oder mehrere bestimmte Ansprüche, auch einzeln oder in beliebiger Kombination eigenständiger Schutz zukommen soll.

### Bezugszeichenliste

- 10: Pellvorrichtung
- 11: Kartoffel
- 12: Halteabschnitt
- 13: Schale
- 14: Pellabschnitt
- 15: Finger
- 16: vorderster Abschnitt bzw. Spitze
- 17: Hand
- 18: Rand
- 19: Bodenabschnitt
- 20: Fingernagel
- 21: Aussparung
- 22: Blattfeder
- 23: Endbereich der Blattfeder

## Patentansprüche

1. Pellvorrichtung (10) für gegartes Gemüse, insbesondere für gekochte Kartoffeln (11), zum Abpellen der Schale (13) des gegarten Gemüses,
bei der ein Halteabschnitt (12) zum Anstecken der Pellvorrichtung (10) an einem Finger (15) eines Benutzers und ein mit dem Halteabschnitt (12) verbundener Pellabschnitt (14) zum Abheben der Schale (13) von dem Gemüse vorgesehen sind,
**dadurch gekennzeichnet, dass** der Halteabschnitt (12) an seinem dem Pellabschnitt (14) zugewandten Ende mit einem Bodenabschnitt (19) stirnseitig geschlossen ist und in dem Bodenabschnitt (19) eine bogenförmige Aussparung (21) zum Aufnehmen eines Fingernagels des die Pellvorrichtung (10) abstützenden Fingers (15) ausgebildet ist.

2. Pellvorrichtung nach Anspruch 1,
**dadurch gekennzeichnet, dass** der Pellabschnitt (14) schalenförmig und in Fortsetzung einer Konusform des Halteabschnitts (12) ebenfalls konisch in Richtung auf seine Spitze (16) zulaufend gestaltet ist.

3. Pellvorrichtung nach Anspruch 1 oder 2,
**dadurch gekennzeichnet, dass** der Halteabschnitt (12) zum Anstecken an nur einem einzelnen Finger (15) des Benutzers gestaltet ist.

4. Pellvorrichtung nach einem der Ansprüche 1 bis 3,
**dadurch gekennzeichnet, dass** der Halteabschnitt (12) ringförmig und insbesondere rohrförmig zum Aufstecken an dem Finger (15) des Benutzers gestaltet ist.

5. Pellvorrichtung nach einem der Ansprüche 1 bis 4,
**dadurch gekennzeichnet, dass** der Pellabschnitt (14) von dem Finger (15) des Benutzers weggerichtet an dem Halteabschnitt (12) angebracht ist.

6. Pellvorrichtung nach einem der Ansprüche 1 bis 5,
**dadurch gekennzeichnet, dass** der Pellabschnitt (14) mit einem kantigen Rand (18) gestaltet ist.

7. Pellvorrichtung nach einem der Ansprüche 1 bis 6,
**dadurch gekennzeichnet, dass** der Pellabschnitt (14) einstückig mit dem Halteabschnitt (12) gestaltet ist.

8. Pellvorrichtung nach einem der Ansprüche 1 bis 7,
**dadurch gekennzeichnet, dass** der Halteabschnitt (12) mit einer Blattfeder (22) zum federnden Vorspannen gegen einen die Pellvorrichtung (10) abstützenden Finger (15) gestaltet ist.

9. Pellvorrichtung nach Anspruch 8,
**dadurch gekennzeichnet, dass** die Blattfeder (22) an der dem Pellabschnitt (14) diametral gegenüberliegenden Seite des Halteabschnitts (12) angeordnet ist.

10. Pellvorrichtung nach Anspruch 8 oder 9,
**dadurch gekennzeichnet, dass** die Blattfeder (22) am Halteabschnitt (12) nach radial innen ragt.

## Claims

1. Peeling device (10) for cooked vegetables, particularly for boiled potatoes (11), for peeling-off the skin (13) of said cooked vegetables, in which device there are provided a holding section (12) for slipping the peeling device (10) onto a user's finger (15) and a peeling section (14), which is connected to said holding section (12), for removing the skin (13) from the vegetables, **characterised in that**, at its end that faces towards the peeling section (14), the holding section (12) is closed, on the end face, by means of a bottom section (19), and an arcuate clearance (21) for receiving a fingernail of the finger (15) supporting the peeling device (10) is formed in said bottom section (19).

2. Peeling device according to Claim 1,
**characterised in that** the peeling section (14) is configured in the shape of a shell and, in continuation of a cone shape of the holding section (12), is likewise configured in a manner tapering conically towards its point (16).

3. Peeling device according to Claim 1 or 2,
**characterised in that** the holding section (12) is configured for slipping onto only a single finger (15) of the user.

4. Peeling device according to one of Claims 1 to 3,
**characterised in that** the holding section (12) is configured in the shape of a ring and, in particular, in the shape of a tube for slipping onto the user's finger (15).

5. Peeling device according to one of Claims 1 to 4,
**characterised in that** the peeling section (14) is attached to the holding section (12) in a manner directed away from the user's finger (15).

6. Peeling device according to one of Claims 1 to 5,
**characterised in that** the peeling section (14) is configured with an angular edge (18).

7. Peeling device according to one of Claims 1 to 6,
**characterised in that** the peeling section (14) is configured in one piece with the holding section (12).

8. Peeling device according to one of Claims 1 to 7,
**characterised in that** the holding section (12) is configured with a leaf spring (22) for resilient pretensioning against a finger (15) supporting said peeling device (10).

9. Peeling device according to Claim 8,
**characterised in that** the leaf spring (22) is arranged on that side of the holding section (12) which lies diametrically opposite the peeling section (14).

10. Peeling device according to Claim 8 or 9, **characterised in that** the leaf spring (22) protrudes radially inwards on the holding section (12).

## Revendications

1. Dispositif d'épluchage (10) pour légumes cuits, notamment pour pommes de terre cuites (11), pour éplucher la peau (13) des légumes cuits ;
dans lequel on prévoit une section de maintien (12) pour enficher le dispositif d'épluchage (10) à un doigt (15) d'un utilisateur et une section d'épluchage (14) reliée à la section de maintien (12) pour retirer la peau (13) des légumes ;
**caractérisé en ce que** la section de maintien (12) est fermée sur le côté avant avec une section de fond (19) au niveau de son extrémité orientée vers la section d'épluchage (14) et qu'un évidement (21) de forme arquée est réalisé au niveau de la section de fond (19) pour loger un ongle de doigt du doigt (15) soutenant le dispositif d'épluchage (10).

2. Dispositif d'épluchage selon la revendication 1, **caractérisé en ce que** la section d'épluchage (14) est réalisé en forme d'épluchure et progresse également de façon conique en direction de son sommet (16) dans le prolongement de la forme conique de la section de maintien (12).

3. Dispositif d'épluchage selon la revendication 1 ou 2, **caractérisé en ce que** la section de maintien (12) est agencée pour s'enficher seulement au niveau d'un doigt (15) individuel de l'utilisateur.

4. Dispositif d'épluchage selon l'une quelconque des revendications 1 à 3, **caractérisé en ce que** la section de maintien (12) est réalisée en forme de bague et notamment en forme de tube pour s'enficher au doigt (15) de l'utilisateur.

5. Dispositif d'épluchage selon l'une quelconque des revendications 1 à 4, **caractérisé en ce que** la section d'épluchage (14) est placée de façon à s'écarter du doigt (15) de l'utilisateur au niveau de la section de maintien (12).

6. Dispositif d'épluchage selon l'une quelconque des revendications 1 à 5, **caractérisé en ce que** la section d'épluchage (14) est réalisée avec un bord (18) anguleux.

7. Dispositif d'épluchage selon l'une quelconque des revendications 1 à 6, **caractérisé en ce que** la section d'épluchage (14) est réalisée d'un seul tenant avec la section de maintien (12).

8. Dispositif d'épluchage selon l'une quelconque des revendications 1 à 7, **caractérisé en ce que** la section de maintien (12) est réalisée avec un ressort à lames (22) pour réaliser la précontrainte élastique contre un doigt (15) soutenant le dispositif d'épluchage (10).

9. Dispositif d'épluchage selon la revendication 8, **caractérisé en ce que** le ressort à lames (22) est disposé au niveau du côté de la section de maintien (12) diamétralement opposé à la section d'épluchage (14).

10. Dispositif d'épluchage selon la revendication 8 ou 9, **caractérisé en ce que** le ressort à lames (22) ressort vers l'intérieur dans le plan radial au niveau de la section de maintien (12).
